(19) Europäisches Patentamt
European Patent Office
Office européen des brevets

(11) Publication number: **0 217 640 B1**

(12) **EUROPEAN PATENT SPECIFICATION**

(45) Date of publication of patent specification: **18.12.91**    (51) Int. Cl.⁵: **G01L 3/10**

(21) Application number: **86307376.3**

(22) Date of filing: **25.09.86**

(54) **A torque sensor of the non-contact type.**

(30) Priority: **30.09.85 JP 216575/85**

(43) Date of publication of application:
**08.04.87 Bulletin 87/15**

(45) Publication of the grant of the patent:
**18.12.91 Bulletin 91/51**

(84) Designated Contracting States:
**DE FR GB**

(56) References cited:
**EP-A- 0 067 974**
**EP-A- 0 136 086**
**EP-A- 0 146 382**
**DE-A- 3 437 379**

**IEEE TRANSACTIONS ON MAGNETICS vol. MAG-18, no. 6, November 1982, New York, US; K. HARADA et al.: "A New Torque Transducer using Stress Sensitive Amorphous Ribbons" pages 1767-1769**

**IEEE TRANSACTIONS ON VEHICULAR TECHNOLOGY vol. VT-31, no. 3, Aug. 1982, pages 117-124, New York, US; W.J. FLEMING et al.: "Automotive Torque Measurements: A Summary of Seven Differnt Methods" pages 119, 120 passage: Magnetostrictive sensor for measurement of shaft permeability**

(73) Proprietor: **KABUSHIKI KAISHA TOSHIBA**
**72, Horikawa-cho Saiwai-ku**
**Kawasaki-shi Kanagawa-ken(JP)**

(72) Inventor: **Kobayashi, Tadahiko Patent Division**
**Toshiba Corp.**
**Principal Office 1-1, Shibaura 1-chome**
**Minato-ku Tokyo(JP)**
Inventor: **Sahashi, Masashi Patent Division**
**Toshiba Corp.**
**Principal Office 1-1, Shibaura 1-chome**
**Minato-ku Tokyo(JP)**
Inventor: **Inomata, Koichiro Patent Division**
**Toshiba Corp.**
**Principal Office 1-1, Shibaura 1-chome**
**Minato-ku Tokyo(JP)**
Inventor: **Domon, Tomokazu Patent Division**
**Toshiba Corp.**
**Principal Office 1-1, Shibaura 1-chome**
**Minato-ku Tokyo(JP)**

(74) Representative: **Shindler, Nigel et al**
**BATCHELLOR, KIRK & CO. 2 Pear Tree Court**
**Farringdon Road**
**London EC1R 0DS(GB)**

## Description

The present invention relates to a torque sensor of the non-contact type and, more particularly, to a torque sensor for converting the torque of a shaft into an electric signal and to an electrical machine incorporating such a torque sensor.

Recently, systems for generating torque, e.g. an engine system, are required to detect torque and produce a detection signal correspondong to the detected torque for controlling the torque generation system. Various torque sensors for detecting the torque of a shaft have been developed to meet the demand noted above. Particularly, there have been proposed torque sensors which can accurately measure the torque of a shaft while out of contact with the shaft, as disclosed by William J. Fleming and Paul W. Wood in "Non-Contact Miniature Torque Sensor for Automotive Application" SAE paper 8206206, presented at the Automotive Engineering Congress; K. Harada, I. Kawajiro, M. Inoue, "A New Torque Transducer Using Stress Sensitive Amorphous Ribbon", IEEE Transaction on Magnetics, Vol. MAG-18, No. 6, November 1982, pages 1767 to 1769; and Japanese Patent Disclosure (KOKAI) 57-211030 (corresponding U. S. Application Serial No. 268890 filed June, 1, 1984) (EP-A2-67 974). The torque sensor disclosed by William J. Fleming et al measures torque applied to an engine crankshaft by making use of the fact that a magnetic characteristic, i.e. magnetic permeability, of the crankshaft is varied according to the torque applied thereto. However, the magnetic property of the measurement zone of the engine crankshaft is not uniform, and there is not magnetic anisotropy on the surface and the inside of the crankshaft. Therefore, the torque cannot be measured accurately. In addition, since the engine crankshaft itself does not have high magnetic permeability, it is necessary to generate a magnetic flux sufficient to penetrate the crankshaft measurement zone and be detected. Therefore, the magnetic flux control means is inevitably large in scale. In the torque sensor disclosed by K. Harada et al, an amorphous magnetic ribbon is arranged along the entire circumference of a portion of a shaft, and a coil assembly is provided around and coaxial with the shaft. The coil assembly generates a magnetic flux parallel to the axis of the shaft, and the change in permeability of the amorphous magnetic ribbon, due to the torque coupled to the shaft, is measured. Although this torque sensor can solve the problem noted above, since the coil assembly generates a magnetic flux parallel to the axis of the shaft, which has a relatively high magnetic reluctance, a comparatively large exciting current has to be supplied to the coil assembly. In addition, since the coil assembly is provided around the shaft, a space for providing the coil assembly is necessary around the shaft. Therefore, the torque sensor cannot be readily assembled in the system which generates the torque and, depending on systems, the space for assembling the torque sensor cannot be ensured. Further, the amorphous magnetic ribbon arranged along the entire circumference of the shaft has to be given an induced magnetic anisotropy in a predetermined direction. However, it is difficult to give the amorphous magnetic ribbon, which is a cylindrical amorphous magnetic ribbon, an induced magnetic anisotropy in a predetermined direction. Further, the magnetic permeability of the amorphous magnetic ribbon may not be uniform when, as usual, the shaft is mainly of iron. Variations of the magnetic permeability are liable to result without variations of the torque while the entire circumference of the shaft is under measurement due to lack of uniformity of the magnetic property of the shaft. Therefore, noise is introduced into the torque detection output and the signal-to-noise ratio (S/N) is reduced. For solving such problems, a torque sensor of non-contact type is disclosed in U. S. Patent No. 4590807 (EP-A2-146 382), and the sensor can be readily disposed in a comparatively small space, can measure the torque of a shaft with a comparatively small exciting current and also has a satisfactory S/N ratio. However, this torque sensor uses the variations of the magnetic permeability of an amorphous magnetic ribbon.

The present invention has been devised in view of the above situation and has as its object to provide a torque sensor of the non-contact type which can operate accurately with a satisfactory signal-to-noise ratio under the effect of an external magnetic field and which can readily be disposed in a comparatively small space and which can measure the torque of a shaft with stable operation. It is a further object of the invention to provide an electromagnetic machine, such as an induction motor, in which such a torque sensor is fitted.

According the present invention, a torque sensor of the non-contact type for detecting torque applied to a rotatable shaft comprises a magnetic member securable to a circumferential portion of the shaft and a detector spaced from the shaft for detecting variation of the magnetic characteristics of the member in dependence upon the torque applied to the shaft characterised in that the detector comprises two parts disposed in angularly spaced relation relative to the shaft and each capable of detecting variation of the magnetic characteristics of the member and of producing a signal representative of the magnetic characteristics and signal processing means for obtaining a mean value of the output signals from the two parts.

In order that the invention may be more readily understood, it will now be described, by way of example only, with reference to the accompanying drawings, in which:-

Figure 1 is a side elevation, partly in section, of an induction motor mounting a torque sensor according to the present invention;

Figure 2 is a perspective view of an end plate forming part of the motor shown in Figure 1;

Figure 3 is a schematic perspective view of a torque sensor according to the present invention;

Figure 4 shows the principle of the torque sensor shown in Figure 3;

Figure 5 is a schematic sectional view of part of the magnetic core of the sensor shown in Figure 3;

Figure 6 is a graph showing the relationship between inductance detected by the torque sensor and the angle of rotation of the shaft shown in Figure 3;

Figure 7 is a schematic view of an embodiment of a torque sensor according to the present invention;

Figure 8 is a cross-sectional view of the shaft and the torque sensor shown in Figure 7;

Figure 9 is a block diagram of a detector of a sensor according to the present invention;

Figure 10 is a graph showing the relationship between the output voltage (Vout) of the detector and the torque;

Figure 11 is a block diagram of a detector of a torque sensor of another embodiment according to the present invention;

Figure 12 is a schematic perspective view of an alternative sensor;

Figure 13 is a block diagram of a detector of a torque sensor of a still further embodiment of the present invention; and

Figure 14 is an extended view of the shaft surface of a still further embodiment of the present invention.

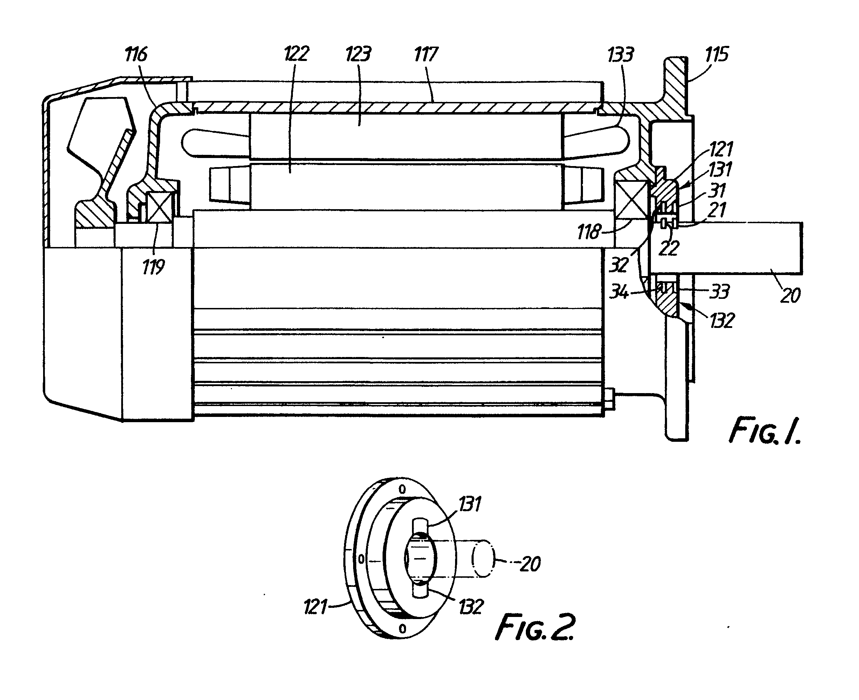

In Figure 1, an induction motor has a stator 123 having a coil 133 fixed on the inside of the outer peripheral wall in a core 117. A conventional rotor 122 is mounted on a shaft 20 which is supported by bearings 118 and 119 which are, respectively, supported in non-magnetic brackets 115 and 116 fixed to the frame 117. An end plate 121 is connected to the outside of the bracket 115. The end plate, see Figure 2, is shaped like a doughnut and carried two torque detectors 131 and 132 mounted on the inside of the doughnut ring. Two amorphous magnetic ribbons 21 and 22 having high magnetic permeability are fixed on the surface of the motor shaft 20.

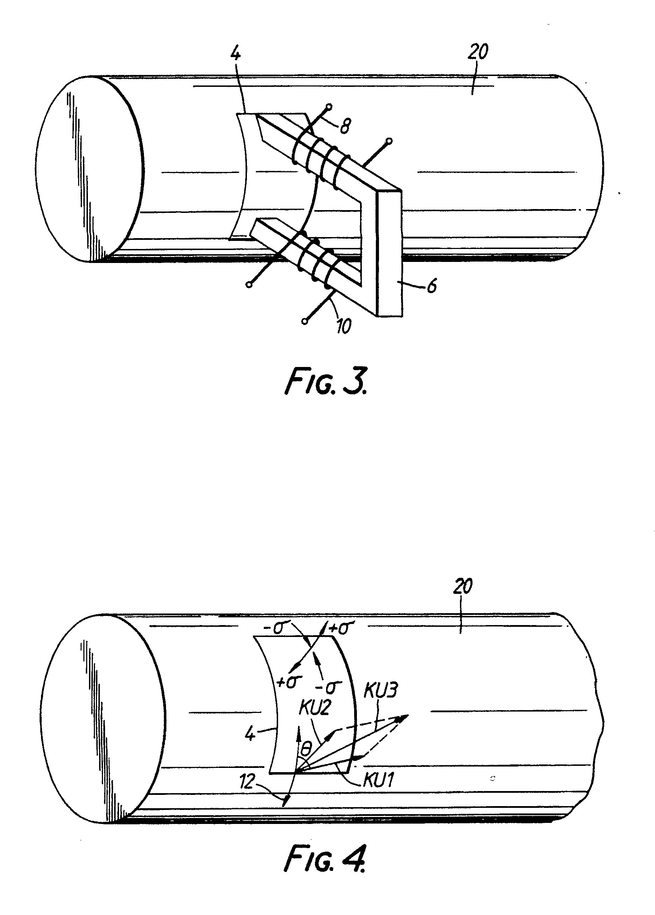

In use, the motor 1 is operated in the conventional manner and the torque sensors 131 and 132 detect the torque applied to the shaft 20. In a torque sensor of the non-contact type, as shown in Figure 3, a magnetic sheet, preferably an amorphous magnetic ribbon 4, is arranged, fixed and bonded along the circumferential direction of the shaft 20. Further, an induced magnetic anisotropy is applied in advance to the amorphous magnetic ribbon 4 in the direction of angle to the circumferential direction of the ribbon. A U-shaped magnetic core 6, formed of a magnetic material, for example, an oxide magnetic material, is disposed in the vicinity of the shaft 20, and the end faces of the core 6 are opposite to and spaced from the ribbon 4. An exciting coil 8 for generating a magnetic flux depending upon the magnetic permability of the amorphous magnetic ribbon 4 is wound around the U-shaped magnetic core 6.

Such a torque sensor of a non-contact type detects the torque according to the principle which will now be described with reference to Figure 4. Here, an induced magnetic anisotropy $Ku_1$ is applied in advance to the amorphous magnetic ribbon 4 in the direction of angle $\theta > 45°$ along the circumferential direction of the shaft 20, and its saturated magnetostriction is to be $\lambda_s > 0$. When the shaft carries torque, a distortion stress generated at the shaft 20 is transmitted to the amorphous magnetic ribbon 4. A tension $+\delta$ is produced in a direction of $+45°$ to the circumferential direction in the magnetic ribbon 4, and a compression stress $-\delta$ is produced in a direction of $-45°$ to the circumferential direction. A magnetic anisotropy $Ku_2$ is induced by the magnetostriction in the magnetic ribbon 4 in response to these tensions $+\delta$ and the compression stress $-\delta$. Therefore, a magnetic anisotropy $Ku_3$ is produced as the resultant vector of the magnetic anisotropies $Ku_1$ and $Ku_2$. In general, the magnetic permeability depends upon the direction of the vector of the magnetic anisotropy $Ku_3$, and the variations in the magnetic permeability are present as variations in the mutual inductance in the magnetic ribbon 4 between the exciting coil 8 and the detecting coil 10 in the sensor, as shown in Figure 3. In other words, when a constant AC voltage is applied to the exciting coil 8 to generate the magnetic flux which passes through the magnetic ribbon 4, variations in the torque applied to the shaft 20 are present as variations in the AC voltage induced in the detecting coil 10. From actual experiments, it has been confirmed that linearity exists between the torque applied to the shaft 20 and the change of the voltage induced in the detecting coil 10 and measured by the voltmeter (not shown).

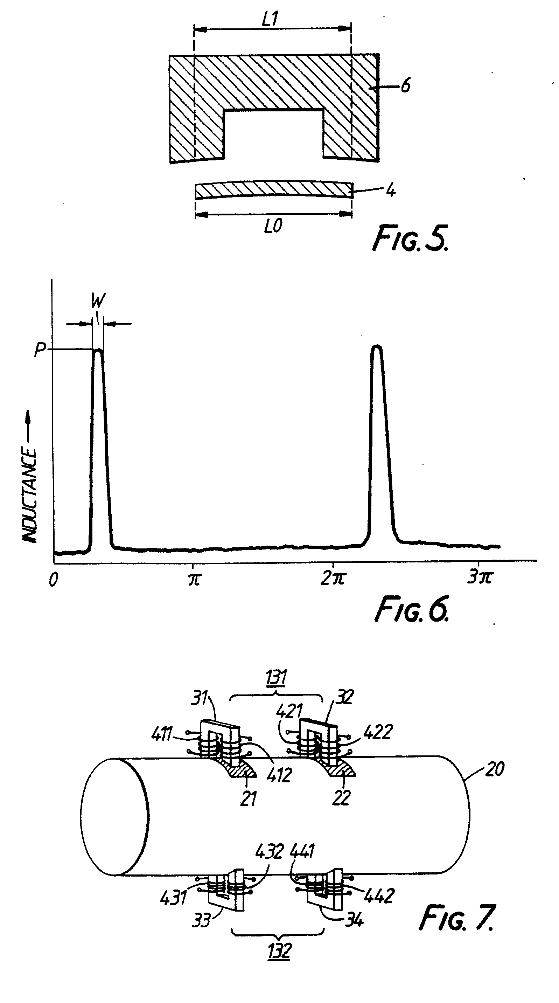

The amorphous magnetic ribbon 4 is not arranged along the entire circumference of the shaft 20 but is arranged along a given circumferential area, as shown in Figures 3 and 4. As shown in Figure 5, the length LO of the amorphous magnetic ribbon 4 is suitably in a range

$$L1 \leqq LO \leqq 2L1$$

where L1 is the effective length of the magnetic path of the magnetic core 6.

The length L1 of the effective magnetic path of the core 6 is defined as the length of that magnetic path in which changes in the magnetic flux of the amorphous magnetic ribbon 4 can be effectively detected.

The inequality noted above is based on the following considerations. The core 6 can detect changes in the magnetic flux of the amorphous magnetic ribbon 4 only when the centre-to-centre distance between the end faces of the core 6 corresponds to the effective magnetic path length and the amorphous magnetic ribbon is positioned between the centres of end faces of the core 6 while the shaft 20 is being rotated. Therefore, when the length LO of the amorphous magnetic ribbon 4 is smaller than the effective magnetic path length L1 of the minimum sensor core 6, the inductance P, as shown in the graph of Figure 6, is greatly reduced to reduce the sensitivity of detection. On the other hand, when the length LO of the amorphous magnetic ribbon 4 is more than double the effective magnetic path length L1 of the core, i.e. $1L1 \leq LO$, the width W of the peak shown in Figure 6 is increased and the inductance P is varied to reduce the signal-to-noise ratio. For this reason, it is desired that there holds a condition $L1 \leq LO \leq 2L1$. Further, considering the fact that the core 6 has a pair of legs, the length LO is required to be less than one half the length Ls of the circumference of the shaft 2, that is, $LO < (\frac{1}{2})Ls$.

Figure 7 shows a detailed structure of an embodiment according to the present invention. As is shown, a pair of amorphous magnetic ribbons 21 and 22 are bonded by adhesive to a shaft 20 of a ferromagnetic material having a diameter of 40 mm. The ribbons 21 and 22 are cut to a length of $LO = 10$ mm from a $(Fe_{0.2}Co_{0.8})_{78}Si_8B_{14}$ amorphous magnetic alloy strip fabricated by a rolling process and have a width of 5 mm and a thickness of 30 μm. Induced material anisotropy is applied to these magnetic strips 21 and 22 in directions at angles, for example, +45° and, for example, -45° with respect to the circumferential direction of the shaft 20. End faces of two pairs of U-shaped magnetic cores 31, 32, 33 and 34 are concentrically arranged around the shaft 20 with a gap of 1 mm provided between each end face of the cores and the outer surface of the magnetic strips 21 and 22. Exciting coils 411, 421, 431 and 441 and detecting coils 412, 422, 432 and 442 are wound on the cores 31, 32, 33 and 34, respectively. The pair of detecting coils 412 and 422, and the pair of detecting coils 432 and 442 are differentially connected, as shown in Figure 9. The effective magnetic path length LO of the cores 31, 32, 33 and 34 are set to 10 mm, respectively. Magnetic flux is transmitted through the magnetic ribbons 21 and 22 in the circumferential direction of the shaft 20.

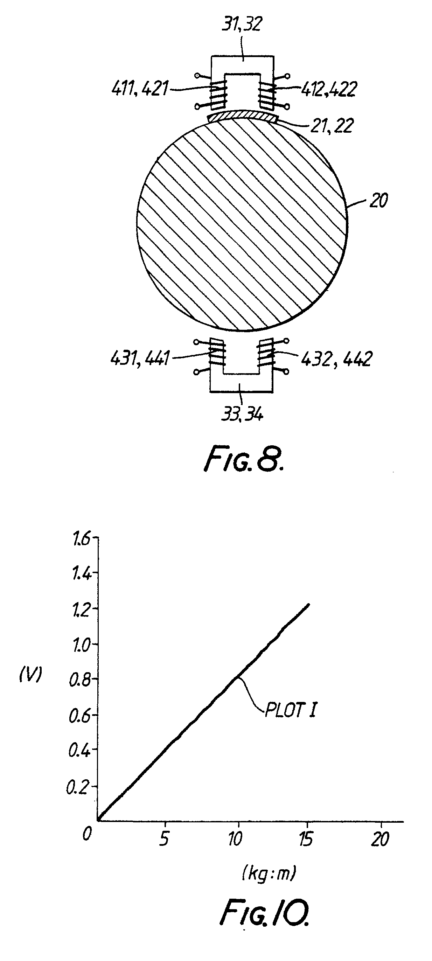

As shown in Figure 8, the pair of magnetic cores 31 and 32 and the pair of magnetic cores 33 and 34 are positioned with respect to shaft 20 symmetrically in relation to the phase of the external magnetic influences on the circumference of the shaft. In the arrangement shown the pairs are displaced by 180°. These positions differ according to the type of magnetic flux producing apparatus with which the sensor is employed. For example, the theoretical symmetrical positions are 15°, 30°, 45°, 60°, 90°, 120°, 180°, etc. for DC motor, AC mono phase motor, AC three phase induction motor, etc.

Next, a circuit for processing detection signals outputted from the detecting coils 412, 422, 432 and 442 shown in Figure 7 will be described with reference to Figure 9. Exciting coils 411, 421, 431 and 441 which are cumulatively coupled are connected to an oscillator 45, and the differentially connected first pair of detecting coils 412 and 422, and second pair of detecting coils 432 and 442 are connected to a detecting circuit 216 in series. The AC source 45 is in the frequency range from 1KHz to 500KHz and a more convenient range is from 10KHz to 100KHz. If the torque coupled to the shaft 20 is changed while the coils 411, 421, 431 and 441 are excited, the magnetic permeability of the amorphous magnetic ribbons 21 and 22 is changed. A detection voltage signal at a level corresponding to the magnetic permeability is detected by the detecting coils 412, 422, 432 and 442. That is, the detecting coils 412, 422, 432 and 442 generate a detection voltage signal corresponding to the torque coupled to the shaft 20.

The external noise that is produced by the magnetic influence at the circumference of the shaft on the electric motor is superimposed on to the output signal. A differential output is obtained from the first pair of detecting coils 412 and 422 and also a differential output is obtained from the second pair of detecting coils 432 and 442. These external noises have a phase difference which is a reversed phase of 180° around the shaft surface. The output signal (Vout) is taken from detecting coils 412, 422, 432 and 442.

The output voltage signal (Vout) is detected by a detector 216. The detection signal obtained from the detector 216 is fed to an integrator 218 connected thereto for conversion to an integral output signal.

In this embodiment, the detecting output of the integrator is twice that which would be obtained if only one detector was used.

The integral output signal thus obtained is converted by an analog-to-digital converter 220 from analog signals into digital signals. The digital signals thus obtained are averaged by an averaging circuit 228 connected to the analog-to-digital converter 220.

The shaft 20 is provided with a rotation sensor 224 for detecting the rate of rotation. The sensor 224 generates a rotation signal for every revolution of the shaft 20. A pulse generator 232 connected to the sensor 224 generates a synchronous pulse having a predetermined pulse width every time it receives a rotation signal. The pulse generator 232 is connected to the averaging circuit 228 and the digital signal is averaged and calculated by the averaging processing circuit unit 228 in response to the synchronising pulses. The averaged digital voltage output is fed to an output terminal 230. Where the amorphous magnetic ribbons 21 and 22 are arranged along the entire circumference of the shaft 20 the rotational rate may be detected at any point. However, it is necessary that the rotation signal is generated to generate a synchronous pulse while the amorphous magnetic ribbons 21 and 22 are temporarily disposed between the centres of end faces of the cores 31, 32, 33 and 34 in the case where the amorphous magnetic ribbons 21 and 22 are arranged along only a circumference portion of the shaft 20. Accordingly, in the above circuit, magnetic characteristics of a particular circumferential portion of the amorphous magnetic ribbons 21 and 22 are averaged at the averaging calculating circuit 228 for each revolution of the shaft 20 to detect a torque applied to the shaft 20. In other words, a pulse signal is generated in synchronism with the rotation of the shaft 20 and, in resonse to this pulse, a magnetic characteristic change of the particular circumferential portion of the amorphous magnetic ribbons 21 and 22 is obtained. Thus, it is possible to measure the torque accurately even if the magnetic permeability detected by the detecting coils 412, 422, 432 and 442 is not constant over the entire circumference of the shaft 20.

The averaging circuit 228 includes two arithmetic processing units 228a and 228b to which pulse generator 232 is connected. When a gate (synchronising) pulse is fed to the averaging circuit 228, the first arithmetic processing unit 228a is held enabled and the second arithmetic processing unit 228b is held disenabled and, when the next pulse is fed to the averaging circuit 228, the first arithmetic processing unit 228a is held disenabled and the second arithmetic processing unit 228b is held enabled. When one of the arithmetic processing units is enabled, the digital signals are fed from the A/D converter 220 to averaging processing circuit 228 and are processed by the enabled arithmetic processing unit of the averaging circuit. As a result, the averaging circuit 228 provides an averaged voltage signal to output terminal 230.

In the above circuit, magnetic characteristics of the amorphous magnetic ribbons 21 and 22 are averaged for each revolution of the shaft 20, whereby an average voltage signal corresponding to the magnetic characteristics of the amorphous magnetic ribbons 21 and 22 is provided from the output terminal 230. This is, a pulse signal is generated in synchronism with the rotation of the shaft 20 and the magnetic characteristics of the particular circumferential portion of the amorphous magnetic ribbons 21 and 22 are averaged in response to the pulse.

Thus, even if the magnetic influence at the detecting coils 412, 422, 432 and 442 is not constant and even if the magnetic permeability detected by the detecting coils 412, 422, 432 and 442 is not constant over the entire circumference of the shaft 20, the torque can be measured accurately by cancelling the effect of the lack of uniformity of the magnetic permeability and by averaging over each revolution. Particularly, it is possible to prevent output fluctuations stemming from the lack of uniformity of the external magnetic flux and the magnetic permeability, and to obtain stable torque detection with a large signal-to-noise ratio. Further, the torque sensor itself may have a reduced size and be accommodated in a small space.

A signal processing circuit such as above-mentioned circuit outputs the output signal which is synthesised by cancelling the noise and averaging all the signals obtained from the detecting coils.

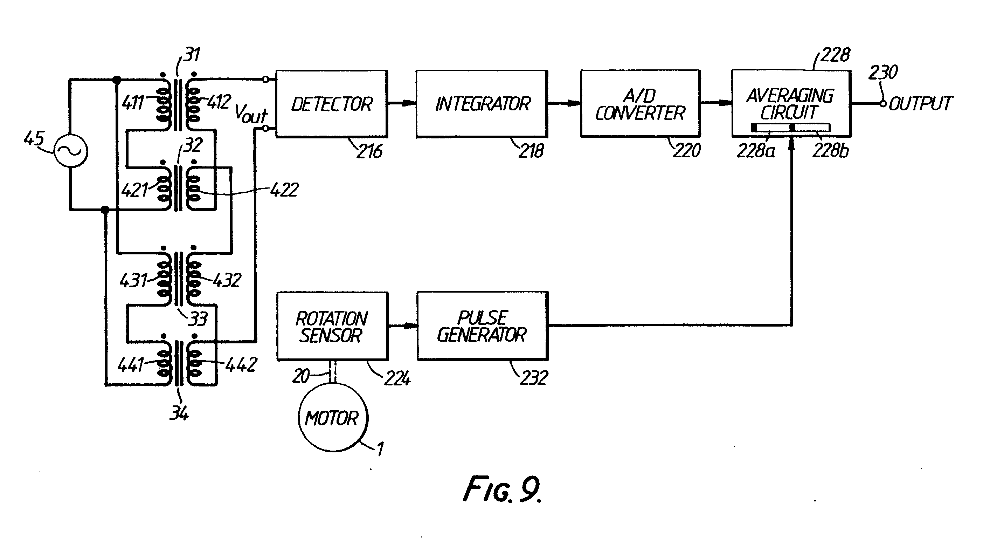

Practically, it is found that, when the torque applied to the shaft 20 is detected with the torque sensor using the circuit of Figure 9 while the shaft is rotated at 1500 rpm, the output voltage changes linearly with a sufficiently S/N ratio according to a changing torque, as shown in Figure 10.

The amorphous magnetic ribbon and magnetic core may be made of Permalloy, Sendust and Fe-Si alloys.

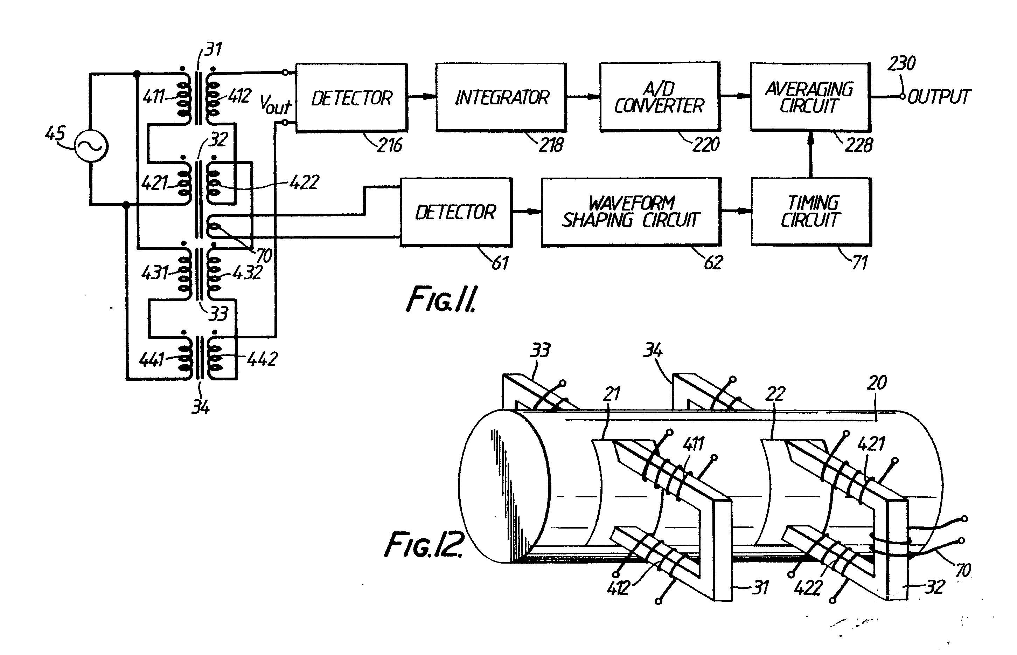

A modification of the circuit for obtaining the synchronising signals using the averaging circuit 228 employed in the torque sensor according to the present invention will now be described with reference to Figures 11 and 12. A third coil 70 is wound, as shown in Figure 12, on one of the detector magnetic cores 32 and is used instead of the rotation sensor and the pulse generator.

The signal produced in the third coil 70 is applied to detector circuit 61 and the signal of the detector circuit 61 is fed to a wave forming circuit 62. Synchronising pulse signals for the averaging processing circuit 228 are obtained through a timing circuit 71 based on the signal which is made from the wave forming circuit 62.

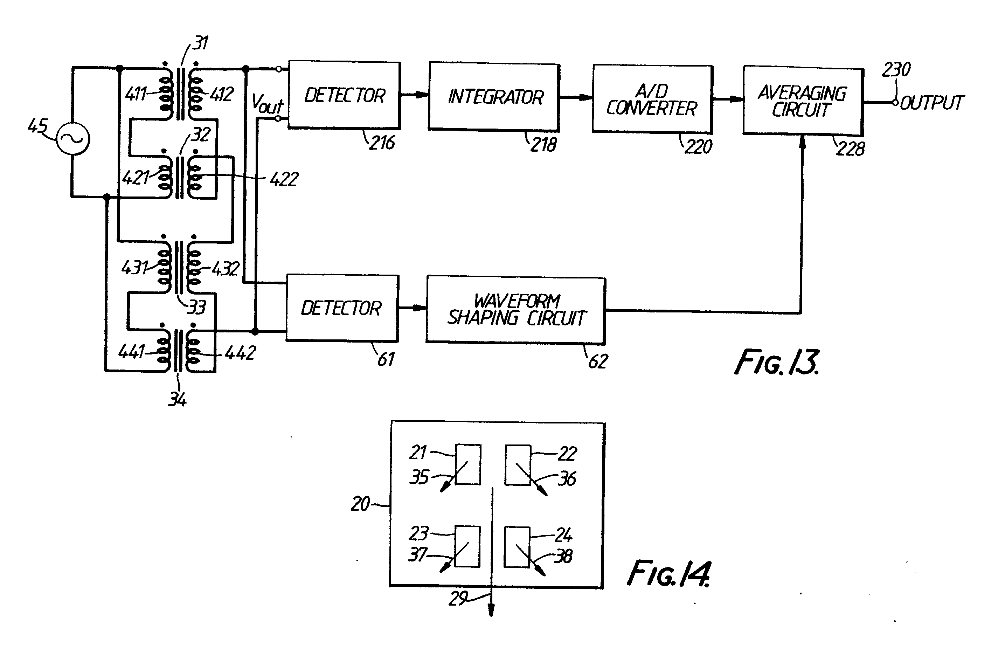

Another variation of the synchronising pulse signals formed by the signal processing circuit is provided, as shown in Figure 13, by using the sensor output signal Vout of the detecting coils. The Vout signal is inputted to a detector circuit 61 and then the obtained signal is converted to a synchronising pulse signal for the averaging circuit by a wave shaping circuit 62.

As shown in Figure 14, two pairs of magnetic ribbons 21 and 22, and 23 and 24 are fixed on the surface of the shaft 20 for producing a high output signal having sufficient S/N ratio. The direction of the induced magnetic anisotropy is indicated by reference numerals 35, 36, 37 and 38 on each magnetic ribbon 21, 22, 23 and 24.

## Claims

1. A torque sensor of the non-contact type for detecting torque applied to a rotatable shaft (20), said sensor comprising a magnetic member (21, 22) securable to a circumferential portion of the shaft and a detector spaced from the shaft for detecting variation of the magnetic characteristics of the member in dependence upon the torque applied to the shaft characterised in that the detector comprises two parts (31, 33) disposed in angularly spaced relation relative to the shaft and each capable of detecting variation of the magnetic characteristics of the member and of producing a signal representative of the magnetic characteristics and signal processing means (216, 218, 220, 228) for obtaining a mean value of the output signals from the two parts.

2. The torque sensor as claimed in claim 1, characterised in that said signal processing circuit is connected with an average processing circuit (228) for averaging the output signal from said parts of the magnetic detector.

3. The torque sensor as claimed in claim 2, characterised in that said average processing circuit comprises two arithmetic processing units (228a, 228b) operable mutually in an enabled state and disenabled state, respectively.

4. The torque sensor as claimed in any preceding claim, characterised in that said processing means includes a synchronising pulse producing circuit (224, 232).

5. The torque sensor as claimed in claim 4, characterised in that said synchronising pulse producing circuit comprises a shaft rotation sensor (224) and a pulse generator (232).

6. The torque sensor as claimed in claim 4, characterised in that said synchronising pulse producing circuit obtains an output voltage signal which is produced by said magnetic detector.

7. A torque sensor as claimed in claim 1 characterised in that said sensor comprises a pair of magnetic members (21, 22) each arranged in the circumferential direction on the peripheral surface of the shaft (20) and spaced apart in the direction of the length of the shaft; a pair of magnetic detectors (31, 33; 32, 34) arranged one with each of the magnetic members for detecting the variation of the magnetic characteristics of the member, each detector comprising a pair of magnetic core members (31, 33; 32, 34) disposed relative to the shaft at locations where they are influenced by respective external magnetic fields of opposite phase, an exciting coil (411, 421, 431, 441) wound on each core member for producing a magnetic flux when the coil is energised by an AC source and a detecting coil (412, 422, 432, 442) on each core member for detecting magnetic flux; and a signal processing circuit (216, 228) for producing a mean value of output signals produced by said magnetic detectors.

8. The torque sensor as claimed in claim 7, characterised in that said magnetic detectors are connected in series.

9. The torque sensor as claimed in claim 7 or 8, characterised in that said processing circuit is operated by a synchronising pulse obtained from a coupling coil (70) coupled to at least one of said magnetic cores.

10. The torque sensor as claimed in any preceding claim, characterised in that said exciting AC source generates a frequency in the range from 1KHz to 500KHz.

11. The torque sensor as claimed in claim 10, characterised in that said exciting AC source generates a frequency in the range from 10KHz to 100 KHz.

12. The torque sensor as claimed in any preceding claim, characterised in that the or each magnetic member essentially consists of a material selected from a group consisting of amorphous magnetic alloys, Permalloy, Sendust and Fe-Si alloys.

13. The torque sensor as claimed in claim 12, characterised in that the or each magnetic member is in the form of a ribbon arranged over at least a part of the circumference of said shaft.

14. The torque sensor as claimed in claim 7, characterised in that each of said magnetic members has a dimension relating to the following equation

L1≦LO≦2K1

where LO is a length of the circumferential dimension of said magnetic ribbon and L1 is the effective length of the magnetic path of each said magnetic core.

15. A rotatable electrical machine having a torque sensor as claimed in any preceding claim associated with the shaft of the machine.

16. A rotatable electrical machine as claimed in claim 15, characterised in that the or each detector is mounted on a non-magnetic end plate (121) of the machine.

## Revendications

1. Capteur de couple ou de moment de torsion du type "sans contact physique" pour déterminer le couple appliqué à un arbre rotatif (20), ledit capteur comprenant un organe magnétique (21, 22) pouvant être monté sur une partie circonférentielle de l'arbre, et un détecteur espacé de l'arbre pour détecter les variations des caractéristiques magnétiques dudit organe en fonction du couple appliqué à l'arbre, caractérisé en ce que le détecteur comprend deux parties (31, 33) occupant des positions angulairement espacées par rapport à l'arbre et dont chacune est capable de détecter les variations des caractéristiques magnétiques dudit organe et de produire un signal représentant ces caractéristiques magnétiques et des moyens de traitement de signaux (216, 218, 220, 228) pour obtenir la valeur moyenne des signaux de sortie desdites deux parties.

2. Capteur tel que spécifié dans la revendication 1, caractérisé en ce que ledit circuit de traitement de signaux est connecté à un circuit de traitement (228) faisant la moyenne des signaux de sortie desdites parties du détecteur magnétique.

3. Capteur selon la revendication 2, caractérisé en ce que ledit circuit de moyenne comprend deux unités arithmétiques (228a, 228b) pouvant occuper respectivement un état actif et un état inactif.

4. Capteur selon l'une quelconque des revendications précédentes, caractérisé en ce que lesdits moyens de traitement comportent un circuit produisant des impulsions de synchronisation (224, 232).

5. Capteur selon la revendication 4, caractérisé en ce que le circuit qui produit les impulsions de synchronisation comprend un capteur de rotation (224) et un générateur d'impulsions (232).

6. Capteur selon la revendication 4, caractérisé en ce que le circuit produisant les impulsions de synchronisation délivre un signal électrique de sortie qui est produit par ledit détecteur magnétique.

7. Capteur selon la revendication 1, caractérisé en ce que ledit capteur comprend deux organes magnétiques (21, 22) dont chacun est monté dans la direction circonférentielle de la surface périphérique de l'arbre (20) et qui est espacé dans la direction de la longueur de l'arbre; deux détecteurs magnétiques (31, 33; 32, 34) montés chacun sur l'un des deux organes magnétiques afin de détecter les variations des caractéristiques magnétiques de l'organe, chaque détecteur comprenant deux noyaux magnétiques (31, 33) occupant, par rapport à l'arbre, des emplacements où ils sont influencés par des champs magnétiques externes respectifs ayant des phases opposées, une bobine d'excitation (411, 421, 431, 441) entourant chaque noyau afin de produire un flux magnétique quand la bobine est alimentée par une source électrique alternative, et une bobine de détection (412, 422, 432, 442) sur chaque noyau afin de détecter le flux magnétique; et un circuit de traitement de signaux (216, 228) pour produire une valeur moyenne des signaux de sortie produits par lesdits détecteurs magnétiques.

8. Capteur selon la revendication 7, caractérisé en ce que lesdits détecteurs magnétiques sont montés en série.

9. Capteur selon la revendication 7 ou 8, caractérisé en ce que ledit circuit de traitement est actionné par une impulsion de synchronisation produite par une bobine (70) couplée à l'un des noyaux magnétiques, au moins.

10. Capteur selon l'une quelconque des revendications précédentes, caractérisé en ce que la source électrique alternative d'excitation opère à une fréquence comprise entre 1kHz et 500kHz.

11. Capteur selon la revendication 10, caractérisé en ce que ladite source électrique alternative d'excitation opère à une fréquence comprise entre 10kHz et 100kHz.

12. Capteur selon l'une quelconque des revendications précédentes, caractérisé en ce que chaque organe magnétique se compose essentiellement d'une matière choisie dans le groupe comprenant les alliages magnétiques amorphes, le Permalloy, le Sendust et les alliages Fe-Si.

13. Capteur selon la revendication 12, caractérisé en ce que le ou chaque organe magnétique présente la forme d'un ruban s'étendant sur une partie, au moins, de la circonférence dudit arbre.

14. Capteur selon la revendication 7, caractérisé en ce que chacun desdits organes magnétiques a une dimension exprimée par l'équation suivante :

$$Li \leq LO \leq 2K1$$

dans laquelle LO est la longueur de la circonférence dudit ruban magnétique et L1 est la longueur effective du trajet magnétique de chacun desdits noyaux magnétiques.

15. Machine électrique tournante équipée d'un capteur de moment de torsion ou de couple tel que spécifié dans l'une quelconque des revendications précédentes associé à l'arbre de la machine.

16. Machine électrique tournante telle que spécifiée dans la revendication 15, caractérisée en ce que le ou en ce que chaque détecteur est monté sur une plaque d'extrémité non-magnétique (121) de la machine.

## Patentansprüche

1. Berührungsfreier Drehmomentsensor zum Messen des an eine drehbare Welle (20) angelegten Drehmoments, wobei der Sensor ein Magnetteil (21, 22) aufweist, das an einem Umfangsteil der Welle befestigbar ist und wobei ein Detektor von der Welle beabstandet ist, um Veränderungen in den Magneteigenschaften des Teils in Abhängigkeit von dem auf die Welle wirkenden Drehmoment zu ermitteln, **dadurch gekennzeichnet,** daß der Detektor zwei Teile (31, 33) aufweist, die in bezug auf die Welle im Winkel voneinander beabstandet sind und von denen jedes Veränderungen der magnetischen Eigenschaften des Teils erkennen und ein Signal erzeugen kann, das die magnetischen Eigenschaften wiedergibt, und daß Signalverarbeitungsmittel (216, 218, 222, 228) vorgesehen sind, um einen Mittelwert der Ausgangssignale aus den zwei Teilen zu erhalten.

2. Drehmomentsensor nach Anspruch 1, **dadurch gekennzeichnet,** daß die Signalverarbeitungsschaltung an eine Mittelwertverarbeitungsschaltung (228) angeschlossen ist, um das Ausgangssignal von den Teilen des Magnetdetektors zu mitteln.

3. Drehmomentsensor nach Anspruch 2, **dadurch gekennzeichnet,** daß die Mittelwertverarbeitungsschaltung zwei arithmetische Verarbeitungseinheiten (228a, 228b) aufweist, die jeweils gegenseitig in einem freigegebenen Zustand und einem gesperrten Zustand betreibbar sind.

4. Drehmomentsensor nach einem der vorhergehenden Ansprüche, **dadurch gekennzeichnet,** daß das Verarbeitungsmittel eine Synchronisierungsimpulserzeugungsschaltung (224, 232) einschließt.

5. Drehmomentsensor nach Anspruch 4, **dadurch gekennzeichnet,** daß die Synchronisierungsimpulserzeugungsschaltung einen Wellenrotationssensor (224) und einen Pulsgenerator (232) aufweist.

6. Drehmomentsensor nach Anspruch 4, **dadurch gekennzeichnet,** daß die Synchronisierungsimpulserzeugungsschaltung ein Ausgabespannungssignal erhält, welches von dem Magnetdetektor erzeugt wird.

7. Drehmomentsensor nach Anspruch 1, **dadurch gekennzeichnet,** daß der Sensor ein paar Magnetteile (21, 22) aufweist, die jeweils in Umfangsrichtung auf der Umfangsfläche der Welle (20) angeordnet und in Wellenlängsrichtung beabstandet sind; daß ein Paar Magnetdetektoren (31, 33; 32, 34) zusammen mit je einem der Magnetteile angeordnet ist, um die Veränderungen der Magneteigenschaften des Teils zu messen, wobei jeder Detektor ein paar Magnetkernteile (31, 33; 32, 34) aufweist, die in bezug auf die Welle an Stellen angeordnet sind, an denen sie durch jeweilige externe Magnetfelder von entgegengesetzter Phasen beeinflußt werden, daß eine Anregungsspule (411, 421, 431, 441) um jeden Kern gewickelt ist, um einen Magnetfluß zu erzeugen, wenn die Spule durch eine Wechselstromquelle erregt wird, und daß eine Meßspule (412, 422, 432, 442) auf jedem Kern vorgesehen ist, um den Magnetfluß festzustellen; und daß eine Signalverarbeitungsschaltung (216, 228) vorgesehen ist, um einen Mittelwert der Ausgangssignale zu erzeugen, die von den Magnetdetektoren erzeugt werden.

8. Drehmomentsensor nach Anspruch 7, **dadurch gekennzeichnet,** daß die Magnetdetektoren in Reihe geschaltet sind.

9. Drehmomentsensor nach Anspruch 7 oder 8, **dadurch gekennzeichnet,** daß die Verarbeitungsschaltung duch einen Synchronisierungsimpuls betrieben wird, der von einer Kopplungsspule (70) erhalten wird, die an mindestens einen der Magnetkerne angeschlossen ist.

10. Drehmomentsensor nach einem der vorhergehenden Ansprüche, **dadurch gekennzeichnet,** daß die anregende Wechselstromquelle eine Frequenz im Bereich von 1 kHz bis 500 kHz erzeugt.

11. Drehmomentsensor nach Anspruch 10, **dadurch gekennzeichnet,** daß der anregende Wechselstrom eine Frequenz im Bereich von 10 kHz bis 100 kHz hat.

12. Drehmomentsensor nach einem der vorhergehenden Ansprüche, **dadurch gekennzeichnet,** daß das oder jedes Magnetteil im wesentlichen aus einem Material aus der Grupe von amorphen Magnetlegierungen, Permalloy, Sendust und Fe-Si-Legierungen gebildet ist.

13. Drehmomentsensor nach Anspruch 12, **dadurch gekennzeichnet,** daß das oder jedes Magnetteil in Form eines Bandes über zumindest einem Teil des Umfangs der Welle angeordnet ist.

14. Drehmomentsensor nach Anspruch 7, **dadurch gekennzeichnet,** daß jedes der Magnetteile eine Abmessung entsprechend der folgenden Gleichung hat:

$$L1 \leq LO \leq 2K1,$$

wobei LO eine Länge der Umfangsabmessung des Magnetbades und L1 die effektive Länge des Magnetbades von jedem Magnetkern ist.

15. Drehbare elektrische Maschine mit einem Drehmomentsensor nach einem der vorhergehenden Ansprüche in Verbindug mit der Welle der Maschine.

16. Drehbare elektrische Maschine nach Anspruch 15, **dadurch gekennzeichnet,** daß der oder jeder Detektor auf einer unmagnetischen Endplatte (121) der Maschine montiert ist.

FIG. 1.

FIG. 2.

EP 0 217 640 B1

FIG. 3.

FIG. 4.

FIG. 5.

FIG. 6.

FIG. 7.

31,32

411, 421          412,422

21, 22

20

431, 441          432, 442

33,34

FIG. 8.

PLOT I

FIG. 10.

FIG. 9.

Fig. 11.

Fig. 12.

EP 0 217 640 B1

DETECTOR 216
INTEGRATOR 218
A/D CONVERTER 220
AVERAGING CIRCUIT 228
230 OUTPUT

DETECTOR 61
WAVEFORM SHAPING CIRCUIT 62

FIG. 13.

FIG. 14.

EP 0 217 640 B1